Europäisches Patentamt

**European Patent Office**

**Office européen des brevets**

(19)

(11) Numéro de publication : **0 296 976 B1**

# FASCICULE DE BREVET EUROPEEN

(12)

(45) Date de publication du fascicule du brevet :
**02.01.92 Bulletin 92/01**

(51) Int. Cl.⁵ : **C09D 163/00,** C09D 5/38, C08K 7/20

(21) Numéro de dépôt : **88401581.9**

(22) Date de dépôt : **23.06.88**

(54) **Revêtement décoratif coloré et résistant à l'usure, à base de résine époxydique, pour sols et panneaux, et son procédé de réalisation.**

(30) Priorité : **26.06.87 FR 8709016**

(43) Date de publication de la demande :
**28.12.88 Bulletin 88/52**

(45) Mention de la délivrance du brevet :
**02.01.92 Bulletin 92/01**

(84) Etats contractants désignés :
**BE CH DE ES GB IT LI NL**

(56) Documents cités :
**US-A- 3 171 827**

(73) Titulaire : **SOCIETE FRANCAISE BITUMASTIC SOCIETE ANONYME :**
**Rue des Pâtis, BP.No 2**
**F-76140 Petit Quevilly (FR)**

(72) Inventeur : **Cussot, Christian**
**Rue de Pâtis**
**F-76140 Petit Quevilly (FR)**
Inventeur : **Delage, Didier**
**Rue de Pâtis**
**F-76140 Petit Quevilly (FR)**

(74) Mandataire : **Cournarie, Michèle et al**
**OFFICE BLETRY R.& G. ROGER-PETIT & R.BLETRY 2, boulevard de Strasbourg**
**F-75010 Paris (FR)**

EP 0 296 976 B1

Jouve, 18, rue Saint-Denis, 75001 PARIS

## Description

Il existe actuellement des revêtements de sol résistant à l'usure, à base de résine époxydique, constitués par des charges classiques opaques (notamment quartz et silices), qu'enrobe un liant époxy, et colorés par des pigments broyés ou par une pâte colorante époxy. Ces revêtements traditionnels s'appliquent en une seule passe, sont autolissants, ils sont d'une seule teinte, uniformes et satinés à l'état neuf, sauf s'ils contiennent un agent matant ; un tel revêtement, s'il est initialement brillant, devient d'ailleurs mat en se rayant à l'usage; sa surface peut être lisse, ou structurée (si le revêtement doit être antidérapant).

L'emploi d'une résine époxy dans un revêtement offre plusieurs avantages : cette résine a des résistances mécaniques (dureté 2 dans l'échelle Gardner) et chimiques remarquables, elle est peu inflammable (classement M1 dans l'échelle de classement au feu des matériaux pour bâtiments du Centre Scientifique et Technique du Bâtiment), sa combustion ne dégage pas de vapeurs toxiques, elle est translucide et a une couleur ambre clair permettant toutes les colorations. Certaines résines polyuréthannes sont dures, translucides et claires, mais elles sont sensible à l'humidité (elles réagiraient avec l'eau que contient un béton ou un ciment sur lequel elles seraient étalées, la réaction dégageant du gaz carbonique, qui formerait dans le revêtement des bulles inesthétiques et en diminuant l'adhérence) ; de plus, elles sont inflammables (classement M2 ou M3) et elles dégagent à la combustion de l'acide cyanhydrique très toxique. L'emploi des résines époxy est donc préféré.

Il existe également des revêtements décoratifs colorés à base de résine époxy et de grains de quartz coloré dénommé "Quartzcolor". Ces grains ont un diamètre relativement important, ils sont lourds et s'ils étaient mis en vrac dans la résine, ils se déposeraient, ce qui entraînerait des différences d'aspect en surface, l'épaisseur d'un revêtement, sur béton notamment, étant irrégulière du fait que la surface d'un support en béton n'est pas plane, même après une préparation. La technique actuelle consiste donc à déposer sur le béton cinq couches minces successives de liant époxy, chaque couche étant saupoudrée desdits grains de quartz. Les couches sont appliquées à des intervalles d'une journée ; l'application se fait donc en cinq jours. Le revêtement obtenu a une épaisseur totale de 1 à 1,5 mm. Il présente un risque de décollement des couches, dont l'adhésion est purement physique, et il a de ce fait une résistance médiocre aux chocs mécaniques. Les grains de quartz peuvent être remplacés par des lamelles en polyester coloré ; la technique d'application du revêtement est la même, avec les mêmes inconvénients.

D'autres revêtements décoratifs d'une épaisseur de 1 à 2 mm sont réalisés en une seule passe au moyen d'une mélange de résine époxy sans charge (ce qui rend l'application difficilement contrôlable) et de pigments, mais les pigments se déposent et, sur un support à surface non uniforme comme le béton, le revêtement présente des zones teintées et des zones peu colorées au droit des creux de la surface en béton, d'où un aspect inesthétique après la polymérisation du liant époxy.

La présente invention a pour but de remédier à tous les inconvénients susindiqués des revêtements antérieurs, en fournissant un nouveau revêtement décoratif coloré et résistant à l'usure, qui soit en outre translucide et scintillant, qualités que ne présente aucun des revêtements antérieurs et qui se maintiendront au cours de l'usage du revêtement.

Le but de l'invention est atteint avec un revêtement à base de résine époxydique, applicable sur sols et panneaux, caractérisé en ce qu'il est constitué par un mélange homogène de résine époxydique sans solvant contenant des additifs usuels, de microbilles de verre pleines et de paillettes d'aluminium colorées par des pigments, ce revêtement étant ainsi pigmenté dans la masse, translucide et scintillant de façon durable, la résine époxydique, comprenant un constituant fondamental avec additifs (agent tensio-actif ayant un effet débullant, antimoussant, antirayures, assurant l'homogénéité ; huile conférant la souplesse) et un durcisseur, représentant 19 à 40% en poids du revêtement, les microbilles de verre 40 à 80% en poids, et les paillettes d'aluminium 1 à 10% en poids

Ce revêtement est applicable sur tout support en matériau rigide, béton, mortier, ciment, fibrociment, carrelage, bois, contreplaqué, agglomérés de fibres, plastiques, carton épais et similaires. Il est principalement destiné à recouvrir des sols, mais il peut aussi décorer des panneaux avec lesquels seront réalisés des murs et des meubles.

Le constituant fondamental de la résine époxy peut être, entre autres, le produit vendu sous la marque "Eurepox XE 764" par la Société SCHERING (France), le durcisseur étant, par exemple, le produit vendu sous la marque "Euredur XE 48" par la même Société. Les additifs peuvent être l'agent tensio-actif vendu sous la marque "BORCHIGOL VL 73S" par la Société BORCHERS (France) et l'huile fabriquée et vendu sous la marque "Sidepaline 10W" par la Société GERLAND (France). Le produit "Eurepox XE 764" (résine contenant un diluant réactif) a un poids équivalent époxy de 185, une viscotité à 25°C de 400 mP/s et une densité de 1,13. Le produit "Euredur XE 48" (adduct aminé cycloaliphatique) a un poids équivalent époxy de 75, une viscosité à 25°C de 600 mP/s et une densité de 1,04.

Les microbiles de verre pleines peuvent être, par exemple, du type 50 100-A2 (FILLER M.B.V.3) vendu par la Société SOGEMET (France). Leur taille peut varier par exemple de 2 à 1100 microns et diverses répartitions granulométriques sont possibles dont les limites inférieure et supérieure sont situées dans la gamme susindiquée mais non limitative de 2 à 1100 microns. On peut citer une granulométrie étagée entre 75 et 106 microns ou entre 44 et 210 microns.

Les paillettes d'aluminium peuvent avoir en surface des dimensions allant de quelques microns à quelques millimètres et avoir une épaisseur de l'ordre de 10 microns. Elles peuvent être, par exemple, celles fabriquées et vendues sous la marque "KINGSTON 1/64" (dimensions 37 microns x 37 microns ; épaisseur 10 microns) par la Société FIREFLAKE INC. (U.S.A.) ; elles sont revêtues d'un vernis époxy coloré et irisé et il en existe toute une gamme de teintes.

Le produit avec lequel on prépare et forme le revêtement est présenté à l'utilisateur sous forme de quatre composants placés dans des emballages distincts : une base époxydique (constituant fondamental de la résine époxy avec additifs), un durcisseur destiné à provoquer le durcissement par réticulation de la résine, une charge (microbilles de verre) et un pigment (paillettes d'aluminium colorées). Ces quatre composants sont rassemblés en proportions adéquates dans un même suremballage (le tout constituant un kit). Le produit ainsi préformulé et prédosé, prêt à l'emploi, évite les erreurs de mise en oeuvre sur le chantier.

Le mode d'application du revêtement est le suivant : sur le support convenablement préparé par les méthodes habituelles (généralement un décapage mécanique, assurant propreté, planéité et accrochage), on étale une ou deux couches d'un primaire d'accrochage (mélange d'une résine époxy, telle que celle vendu sous la marque "EPOXY LC" par la Société Schering, et d'un durcisseur) destiné, notamment sur le béton ou similaire, à emprisonner les bulles d'air dans les pores du support, puis, sur le primaire encore poisseux, on dépose le revêtement suivant l'invention, après avoir préparé comme indiqué ci-après le mélange utilisé : on verse le durcisseur dans la base époxydique, on mélange jusqu'à obtention d'une pâte homogène constituant le liant du revêtement, on verse ce liant dans un malaxeur pour résine mis en route, on ajoute les paillettes colorées (pigment), puis les microbilles (charge formulée et pré-mélangée), puis on malaxe pendant quelques minutes jusqu'à obtention d'un mélange homogène. Les constituants prédosés du mélange ont été ajoutés dans les proportions optimales. Le mortier obtenu est une masse onctueuse, dans laquelle les microbilles et les paillettes sont uniformément réparties. On peut donc l'étaler en bandes en une seule passe sur le primaire d'accrochage, au moyen d'une taloche métallique ou d'une raclette, en réglant au choix l'épaisseur de la monocouche entre 1 et 5 mm. Le revêtement est autonivelant et il se débulle et se tend par lui-même. L'application est donc aisée et elle ne nécessite aucun diluant, en dehors d'un solvant des résines époxy pour le nettoyage des outils et du malaxeur, en fin d'opération. L'invention a aussi pour objet le procédé de réalisation décrit ci-dessus du revêtement.

Le revêtement monocouche obtenu est épais, lisse, sans joint, sans odeur, étanche, hygiénique (de qualité alimentaire), facile à nettoyer, exceptionnellement résistant aux chocs, aux pressions, aux abrasions mécaniques (rayures) et aux attaques par les produits chimiques, tout en ayant une certaine plasticité qui le rend quasiment incassable, donc durable. Ce revêtement a un aspect translucide, coloré et scintillant, particulièrement esthétique et lui aussi durable, les paillettes étant régulièrement réparties dans l'épaisseur du revêtement, ce qui assure la conservation de l'effet décoratif, même si le revêtement est rayé ou éventuellement attaqué chimiquement.

Les microbilles de verre pleines n'affaiblissent pas la dureté conférée au revêtement par la résine époxy, elles coopèrent avec cette résine pour donner au revêtement sa translucidité et une apparence de profondeur, leur granulométrie étagée et leur faible densité apparente assurent leur maintien en suspension homogène dans le liant époxy, ainsi que la répartition régulière, dans l'épaisseur du revêtement, des paillettes qui s'insèrent entre les microbilles et par suite la stabilité dans le temps de l'aspect scintillant. Les paillettes contribuent à la résistance mécanique du revêtement et surtout elles lui donnent sa coloration et son scintillement. En outre, la combinaison microbilles de verrepaillettes d'aluminium colorées occasionne des multireflexions verre-métal de la lumière incidente, accroissant l'effet scintillant recherché.

Les paillettes d'aluminium colorées sont un produit cher. Sans les microbilles de verre, il en faudrait beaucoup dans le liant époxydique, ce quine serait pas industriellement rentable ; d'autre part, étant légères, elles resteraient en surface, seraient arrachées avec l'usure, l'effet scintillant ne serait pas durable. Si l'on utilisait les microbilles de verre seules, il faudrait qu'elles soient elles-mêmes colorées et elles n'auraient pas un effet scintillant. L'emploi conjoint des microbilles et des paillettes dans le liant époxydique est donc particulièrement avantageux.

Le présent revêtement convient bien pour les sols industriels ou non, neufs on anciens, dans de nombreux domaines (industries pharmaceutiques, des produits de beauté et des parfums, électroniques, agro-alimentaires, magasins, hôpitaux) et en général pour tous sols décoratifs et toutes aires où l'on recherche durabilité, faible entretien, possibilité de décontamination et aspect esthétique.

Ce revêtement pourrait être appliqué sur les parois et les plafonds, avec un additif modifiant de façon convenable sa viscosité de façon qu'il ne coule pas et ne goutte pas lors de son étalement.

Un exemple particulier de composition utilisée et de revêtement obtenu est donné ci-après, à titre purement indicatif et nullement limitatif.

## EXEMPLE

### FORMULE
de la composition utilisée

- Composant A. Base :

TYPE XE 764
Société SCHERING = 8,888 kg (98,75 %)

TYPE SIDEPALINE 10W
Société GERLAND = 0,022 kg (0,25 %) } - 9 kg (72 %)

TYPE BORCHIGOL VL 73 S
Société BORCHERS = 0,090 kg (1 %)

(Liant époxy) = 12,5 kg
(32,45 %) en bidons

- Composant B. Durcisseur :

TYPE XE 48
Société SCHERING = 3,5 kg (28 %)

- Composant C. Charge :

Microbilles de verre
TYPE : 50100-A2 (FILLER M.B.V.3)
Société SOGEMET = 25 kg (64,95 %)
(44 à 210 microns) (en sac)

KIT COMPLET
38,5 kg (100 %)

- Composant D. PIGMENT :

TYPE KINGSTON 1/64
Société FIREFLAKE INC. = 1 kg (2,6 %)
(particules d'aluminium revêtues d'un vernis époxy coloré et irisé) (en pot)

Le liant époxy est une résine sans solvant, de faible viscocité et d'un pouvoir mouillant élevé. La charge est inerte et d'une grande dureté ; elle est calibrée, prédosée et prémélangée de façon à conférer au revêtement final la meilleure compacité et un aspect translucide.

Le mélange des constituants, réalisé comme susindiqué, est un mortier semi-épais, autolissant, d'une densité de 1,7 à 20°C, dans lequel le rapport liant (base/durcisseur) est de 100/40 en poids et le rapport mortier (liant/charge) est de 1/2 en poids ; l'extrait sec est de 100% en poids à la température ambiante.

La température d'emploi est comprise entre 5 et 25°C. Le mortier s'applique sur une couche de primaire d'accrochage en une seule passe, en une épaisseur de 3 mm par exemple (consommation 1,7 kg/m² par mm d'épaisseur, soit 5,1 kg/m² pour 3 mm d'épaisseur). Sa durée d'utilisation est de 45 mn à 20°C, de 15 mn à 30°C. Le revêtement commence à durcir au bout de 24 h et est complètement réticulé au bout de 7 jours. Après séchage, il a un aspect lisse, translucide, scintillant. Sa température de service est de −40 à +80°C. Ses propriétés sont les suivantes :

| | |
|---|---|
| Résistance à la compression : | 600 kg/cm² |
| Résistance à la flexion : | 160 kg/cm² |
| Résistance à la traction : | 220 kg/cm² |
| Résistance aux chocs : | 7 kg/m |
| Résistance à l'usure : | Amsler 1,5 μ après 3.000 cycles |
| Résistance chimique : | Des échantillons polymérisés et immergés à 20°C pendant 12 mois dans divers acides forts ou bases fortes résistent à 80% des acides et des bases essayés. |

Des modifications de détail du domaine des équivalents techniques peuvent être apportées au revêtement et au procédé décrits ci-dessus, sans que l'on sorte pour autant du cadre de la présente invention.

**Revendications**

1. Revêtement décoratif, coloré et résistant à l'usure, à base de résine époxydique, pour sols et panneaux, caractérisé en ce qu'il est constitué par un mélange homogène de résine époxydique sans solvant contenant des additifs usuels, de microbilles de verre pleines et de paillettes d'aluminium colorées par des pigments, ce revêtement étant ainsi pigmenté dans la masse, translucide et scintillant de façon durable la résine époxydique sans solvant, comprenant un constituant fondamental avec additifs et un durcisseur, l'ensemble formant le liant époxydique, représentant 19 à 40% du poids total du revêtement, les microbilles de verre pleines représentant 40 à 80% de ce poids, et les paillettes d'aluminium colorées représentant 1 à 10% de ce poids.

2. Revêtement suivant la revendication 1, caractérisé en ce que les microbilles de verre pleines ont une répartition granulométrique variable entre 2 microns et 1100 microns, telle qu'une granulométrie étagée entre 44 et 210 microns ou entre 75 et 106 microns.

3. Revêtement suivant la revendication 1 ou 2 caractérisé en ce que les paillettes d'aluminium colorées ont en surface des dimensions allant de quelques microns à quelques millimètres et elles ont une épaisseur de l'ordre de 10 microns.

4. Revêtement suivant la revendication 3, caractérisé en ce que les paillettes d'aluminium colorées ont des dimensions de 37 microns × 37 microns en surface et ont une épaisseur de 10 microns.

5. Revêtement suivant l'une quelconque des revendications 1 à 4, caractérisé en ce que les paillettes d'aluminium sont colorées du fait qu'elles sont revêtues d'un vernis époxy coloré et irisé.

6. Revêtement suivant l'une quelconque des revendications 1 à 5, caractérisé en ce qu'il est en une seule couche.

7. Revêtement suivant la revendication 6, caractérisé en ce que l'épaisseur de la couche unique est de 1 à 5 millimètres.

8. Revêtement suivant la revendication 1, caractérisé en ce qu'il est constitué, en poids, par 32,45% de liant époxydique, 64,95% de microbilles de verre pleines et 2,6% de paillettes d'aluminium revêtues d'un vernis époxy coloré et irisé, le liant époxydique étant constitué, en poids, de 72% d'une résine de base contenant des additifs et de 28% d'un durcisseur, les microbilles de verre ayant une granulométrie de 44 à 210 microns et les paillettes d'aluminium ayant des dimensions de 37 × 37 microns en surface et une épaisseur de 10 microns.

9. Procédé de réalisation d'un revêtement suivant l'une quelconque des revendications 1 à 8, caractérisé en ce que :

a) sur le support à revêtir, convenablement préparé par les méthodes habituelles, on étale une ou deux couches d'un primaire d'accrochage,

b) on prépare le mortier avec lequel sera formé le revêtement de la façon suivante : on verse le durcisseur dans la résine époxydique sans solvant contenant des additifs et constituant la base époxydique, on mélange jusqu'à obtention d'une pâte homogène constituant le liant du revêtement, on verse ce liant dans un malaxeur pour résine mis en route, on ajoute les paillettes d'aluminium colorées constituant le pigment, puis les microbilles de verre pleines constituant la charge dont la granulométrie a été choisie et qui a été prémélangée, on malaxe le tout pendant quelques minutes jusqu'à obtention d'un mélange homogène, les divers composants ayant été ajoutés en quantités prédosées, et

c) on étale sur le primaire d'accrochage, alors qu'il est encore poisseux, en général dans les trente minutes suivant l'application de celui-ci, le mortier précédemment préparé, qui est une masse onctueuse, dans laquelle les microbilles et les paillettes sont uniformément réparties, l'étalement s'effectuant en une seule passe à l'épaisseur voulue au moyen d'une taloche métallique ou d'une raclette,

le revêtement obtenu étant autolissant et se débullant et se tendant de lui-même.

10. Procédé suivant la revendication 9, caractérisé en ce que le primaire d'accrochage est une résine époxydique, comprenant une résine de base et un durcisseur.

11. Procédé suivant la revendication 9 ou 10, caractérisé en ce que, pour faciliter sa mise en oeuvre, les divers composants du mortier, base époxydique, durcisseur, pigment et charge sont présentés en proportions adéquates dans des emballages distincts, qui sont rassemblés dans un même suremballage.


## Patentansprüche

1. Dekorativer, gefärbter und verschleißbeständiger Überzug auf Basis von Epoxid-Harzen für Böden und Paneele, **dadurch gekennzeichnet**, daß er durch eine homogene Mischung von Epoxidharz ohne Lösungsmittel, welches die gebräuchlichen Zusätze enthält, von Mikrokügelchen aus vollem Glas und von Teilchen aus Aluminium, die durch Pigmente gefärbt sind, gebildet ist, daß der Überzug, der so in der Masse pigmentiert ist, durchscheinend, flimmernd und formbeständig ist, daß das Epoxidharz ohne Lösungsmittel, das einen Hauptbestandteil mit Zusätzen und einen Härter enthält, die Zusammensetzung, die das Epoxidbindemittel bildet, 19 bis 40 % des Gesamtgewichtes des Überzuges betragen, die Mikrokügelchen aus vollem Glas 40 bis 80 % dieses Gesamtgewichtes betragen und die gefärbten Teilchen aus Aluminium 1 bis 10 % dieses Gewichtes betragen.

2. Überzug nach Anspruch 1, **dadurch gekennzeichnet**, daß die Mikrokügelchen aus vollem Glas eine Korngrößenverteilung zwischen 2 und 1.100 Mikrometer haben, sowie eine Korngröße, die zwischen 44 und 210 Mikrometer oder zwischen 75 und 106 Mikrometer abgestuft ist.

3. Überzug nach Anspruch 1 oder 2, **dadurch gekennzeichnet**, daß die gefärbten Teilchen aus Aluminium an der Oberfläche Abmessungen haben, die von einigen Mikrometern bis zu einigen Millimetern reichen und daß sie eine Dicke in der Größenordnung von 10 Mikrometern haben.

4. Überzug nach Anspruch 3, **dadurch gekennzeichnet**, daß die gefärbten Teilchen aus Aluminium an der Oberfläche die Abmessungen von 37 × 37 Mikrometer und eine Dicke von 10 Mikrometer haben.

5. Überzug nach einem der Ansprüche 1 bis 4, **dadurch gekennzeichnet**, daß die Teilchen aus Aluminium durch die Tatsache gefärbt sind, daß sie mit einem gefärbten und regenbogenfarbenen Epoxidfirnis umhüllt sind.

6. Überzug nach einem der Ansprüche 1 bis 5, **dadurch gekennzeichnet**, daß er aus einer Schicht besteht.

7. Überzug nach Anspruch 6, **dadurch gekennzeichnet**, daß die Dicke der einheitlichen Schicht zwischen 1 und 5 mm beträgt.

8. Überzug nach Anspruch 1, **dadurch gekennzeichnet**, daß er zu 32,45 Gewichtsprozent aus Epoxid-Bindemittel, zu 64, 95 Gewichtsprozent aus Mikrokügelchen aus vollem Glas und zu 2,6 Gewichtsprozent aus Teilchen aus Aluminium mit einem gefärbten und regenbogenfarbenen Epoxidfirnis gebildet ist, daß das Epoxidbindemittel zu 72 Gewichtsprozent aus Harzgrundstoff, welcher Zusätze enthält und aus 28 Gewichtsprozent eines Härters gebildet ist, die Mikrokügelchen aus Glas eine Korngröße zwischen 44 und 210 Mikrometer besitzen und die Teilchen aus Aluminium an der Oberfläche Abmessungen von 37 × 37 Mikrometer besitzen und eine Dicke von 10 Mikrometer haben.

9. Verfahren zur Ausführung eines Überzugs nach einem der Ansprüche 1 bis 8, **dadurch gekennzeichnet**, daß :

a) auf die zu verkleidende Unterlage, welche geeignet durch die herkömmlichen Methoden vorbereitet worden ist, ein oder zwei Schichten eines ersten Haftgrundes aufgebracht werden,

b) der Mörtel vorbereitet wird, mit welchem der Überzug in der folgenden Form gebildet wird : Der Härter wird in das Epoxid -Harz ohne Lösungsmittel, welches Zusätze enthält, die die Epoxid-Basis bilden, gegossen ; es wird so lange gemischt, bis eine Masse, die das Bindemittel des Überzugs bildet, entsteht ; das Bindemittel wird in einem Mischer für Harz, welcher in Gang gesetzt wird, gegossen ; die gefärbten Teilchen aus Aluminium, welche das Pigment bilden, werden zugegeben ; dann werden die Mikrokügelchen aus vollem Glas, welche das Füllmaterial bilden, dessen Korngröße vorher ausgesucht wurde und das vorher gemischt wurde, zugegeben, das Ganze wird einige Minuten lang gemischt, bis eine homogene Mischung entsteht, wobei die verschiedenen Bestandteile in vordosierten Mengen zugegeben werden, und

c) auf den ersten Haftgrund, der dann immer noch schmierig ist, wird im allgemeinen während der 30 Minuten nach seinem Auftragen der vorher vorbereitete Mörtel aufgebracht, welcher eine ölige Masse ist, in der die Mikrokügelchen aus vollem Glas und die Teilchen aus Aluminium gleichmäßig verteilt sind, wobei das Ausbreiten zur gewollten mittleren Dicke in einem einzigen Durchgang mit einem metallischen Streichbrett oder einer Spachtel bewerkstelligt wird,

wobei der erhaltene Überzug sich selbst glättet, sich selbst entblast und sich selbst richtet.

10. Verfahren nach Anspruch 9, **dadurch gekennzeichnet,** daß der erste Haftgrund ein Expoid-Harz ist, das einen Harzgrundstoff und einen Härter enthält.

11. Verfahren nach Anspruch 9 oder 10, **dadurch gekennzeichnet**, daß die verschiedenen Bestandteile des Mörtels, Expoid-Basis, Härter, Pigment und Füllstoff in geeigneten Mengen in unterschiedlichen Verpackungen, welcher in einer gleichen Hauptverpackung zusammengefaßt sind, angeboten werden, um die Verarbeitung zu erleichtern.

## Claims

1. Coloured, wear-resistant, decorative coating based on epoxy resin for floors and panels, characterized in that it is constituted by a homogeneous, solvent-free epoxy resin mixture containing conventional additives, solid glass microbeads and pigment-coloured aluminium flakes, said coating thus being bulk-pigmented, translucent and glittering in a durable manner, the solvent-free epoxy resin incorporating a fundamental constituent with additives and a hardener, the total mixture forming the epoxy binder, representing 19 to 40% of the total weight of the coating, the solid glass microbeads 40 to 80% of said weight and the coloured aluminium flakes representing 1 to 10% of said weight.

2. Coating according to claim 1, characterized in that the solid glass microbeads have a grain size distribution variable between 2 and 1100 microns, such as a grain size distribution between 44 and 210 microns or between 75 and 106 microns.

3. Coating according to claim 1 or 2, characterized in that the coloured aluminium flakes have a surface with dimensions between a few microns and a few millimetres and have a thickness of approximately 10 microns.

4. Coating according to claim 3, characterized in that the coloured aluminium flakes have surface dimensions of 37 microns $\times$ 37 microns and a thickness of 10 microns.

5. Coating according to any of the claims 1 to 4, characterized in that the aluminium flakes are coloured as a result of the fact that they are coated with a coloured, irridescent epoxy varnish.

6. Coating according to any of the claims 1 to 5, characterized in that it is in the form of a single layer.

7. Coating according to claim 6, characterized in that the thickness of the single layer is 1 to 5 millimetres.

8. Coating according to claim 1, characterized in that it is constituted, by weight, by 32.45% of epoxy binder, 64.95% of solid glass microbeads and 2.6% of aluminium flakes coated with a coloured, irridescent epoxy varnish, the epoxy binder being constituted, by weight, by 72% of a base resin containing additives and 28% of a hardener, the glass microbeads having a grain size of 44 to 210 microns and the aluminium flakes surface dimensions of 37 $\times$ 37 microns and a thickness of 10 microns.

9. Method for producing a coating according to any one of the claims 1 to 8, characterized in that :

a) on the surface to be coated and appropriately prepared by conventional methods, are spread one or two layers of a keying primer,

b) the mortar with which the coating is to be formed is prepared in the following way : the hardener is poured into the solvent-free epoxy resin containing additives and constituting the epoxy base, mixing takes place until a homogeneous paste is obtained which constitutes the coating binder, said binder is poured into a started up resin mixer, the coloured aluminium flakes constituting the pigment are added, followed by the solid glass microbeads constituting the filler, whose grain size distribution has been chosen and which have been premixed, everything is mixed for a few minutes until a homogeneous mixture is obtained, the various components having been added in predosed quantities and

c) onto the keying primer in the still sticky state and generally within thirty minutes following the application thereof, is spread the previously prepared mortar, which is a greasy mass, in which the microbeads and the flakes are uniformly distributed, spreading taking place in one pass at the desired thickness using a metal float or a scraper and the resulting coating is self-amoothing, debubbles and spreads by itself.

10. Method according to claim 10, characterized in that the keying primer is an epoxy resin incorporating a basic resin and a hardener.

11. Method according to claims 9 or 10, characterized in that, for ease of use purposes, the various components of the mortar, epoxy base, hardener, pigment and filler are provided in adequate proportions in separate packs, which are brought together in the same overpack.